# EUROPEAN PATENT APPLICATION

(11) **EP 4 114 077 A1**
(43) Date of publication of application: **04.01.2023**
(21) Application number: 21761805.7
(22) Date of filing: 13.01.2021
(51) Int. Cl.: H04W 28/06

(54) **DATA TRANSMISSION METHOD AND TERMINAL**

(30) Priority: 28.02.2020 CN 202010130035
(71) Applicant: Datang Mobile Communications Equipment Co., Ltd., Beijing 100085 (CN)
(72) Inventor: FU, Jing, Beijing 100085 (CN); LIANG, Jing, Beijing 100085 (CN); ZENG, Erlin, Beijing 100085 (CN)
(74) Representative: Studio Torta S.p.A.
(86) International application number: PCT/CN2021/071442
(87) International publication number: WO 2021/169645

(57) **Abstract**

Provided in embodiments of the present disclosure are a data transmission method, and a terminal. The method includes: when a terminal meets a first condition of using a first scheme to transmit data, using the first scheme to transmit data; when the terminal meets a second condition of using a second scheme to transmit data, using the second scheme to transmit data; or when the terminal meets the first condition of using the first scheme to transmit data and the second condition of using the second scheme to transmit data, using any one of the first scheme and the second scheme to transmit data, wherein the first scheme is a scheme without radio resource control (RRC) signaling, and the second scheme is one of direct data transmission schemes other than the first scheme. The embodiments of the present disclosure realize selection of a data transmission scheme in a process of transmitting small data.

## Description

### CROSS-REFERENCE TO RELATED APPLICATIONS

The application claims priority to Chinese patent application, entitled "Data Transmission Method and Terminal", No. 202010130035.2, filed on February 28, 2020, which is incorporated herein by reference in its entirety.

### TECHNICAL FIELD

The present application generally relates to communication technology, and more particularly, to a data transmission method and a terminal.

### BACKGROUND

Three radio resource control (RRC) states, including RRC_IDLE state, RRC_ CONNECTED state and RRC_INACTIVE state are designed in a new radio (NR) system. In the RRC_CONNECTED state, an air interface between the terminal and a radio network is available at any time; in the RRC idle state, the air interface between the terminal and the radio network is disconnected; and in the RRC INACTIVE state, the air interface between the terminal and the radio network is suspended and needs to be restored for use.

When the terminal is in the RRCC_INACTIVE state, it will avoid the frequent entry of the terminal into the RRC_CONNECTED state and reduce signaling overhead if small data transmission is allowed directly. However, in current candidate modes for direct transmission of small data, transmission may be performed in a mode with RRC signaling or a mode without (w/o) RRC signaling. However, there is no obvious conclusion about to perform transmission using the mode w/o RRC signaling or the mode with RRC signaling.

### SUMMARY

The present application provides a method for transmitting data and a terminal which may select a mode for direct transmission of small data.

The present application provides a method for transmitting data, including
transmitting data in a first mode when a terminal meets a first condition of transmitting data in the first mode;
transmitting data in a second mode when the terminal meets a second condition of transmitting data in the second mode; or
transmitting data in any one of the first mode and the second mode when the terminal meets both the first condition of transmitting data in the first mode and the second condition of transmitting data in the second mode; in which
the first mode is a mode without (w/o) radio resource control (RRC) signaling, and the second mode is a mode other than the first mode among modes for direct transmission of data.

The present application provides a device for transmitting data, including
a data transmitting module, configured to: transmit data in a first mode when a terminal meets a first condition of transmitting data in the first mode; transmit data in a second mode when a terminal meets a second condition of transmitting data in the second mode; or transmit data in any one of the first mode and the second mode when the terminal meets both the first condition of transmitting data in the first mode and the second condition of transmitting data in the second mode; in which
the first mode is a mode without (w/o) radio resource control (RRC) signaling, and the second mode is a mode other than the first mode among modes for direct transmission of data.

The present application provides a terminal, including a memory, a processor and program stored in the memory, and executable by the processor, which when executed by the processor, causes the processor to perform the above steps of the data transmission method.

The present application provides a non-transitory computer readable storage medium having stored thereon computer programs, which when executed by a processor, causes the processor to perform the above steps of the data transmission method.

The method for transmitting data and the terminal provided by the present application, by transmitting data in the first mode when the terminal meets the first condition of transmitting data in the first mode; transmitting data in the second mode when the terminal meets the second condition of transmitting data in the second mode; or transmitting data in any one of the first mode and the second mode when the terminal meets both the first condition and the second condition; a data transmission mode in transmission of small data can be selected by the terminal, so that the terminal could select an appropriate mode to transmit data.

### BRIEF DESCRIPTION OF THE DRAWINGS

In order to illustrate the embodiments of the present application or related art more clearly, the appended drawings used in the embodiments or the description of related art are briefly introduced below. It should be noted that, the appended drawings in the following description are only some embodiments of the present application. For those of ordinary skill in the art, other appended drawings may also be obtained according to these appended drawings without creative effort.
FIG.1 is a flow diagram of a method for transmitting data in accordance with an embodiment of the present application.
FIG.2 is a modular diagram of a device for transmitting data in accordance with an embodiment of the present application.
FIG.3 is a structural diagram of a terminal in accordance with an embodiment of the present application.

### DETAILED DESCRIPTION

In order to make the purposes, technical solutions and advantages of the embodiments of the present application clearer, the technical solutions of the embodiments of the present application is clearly and completely described in combination with the appended drawings of the embodiments of the present application. The embodiments described are a part of the embodiments of the present application, rather than all the embodiments. Based on the embodiments of the present application, all other embodiments obtained by those of ordinary skill in the art without creative labor fall within the scope of the protection of the present application.

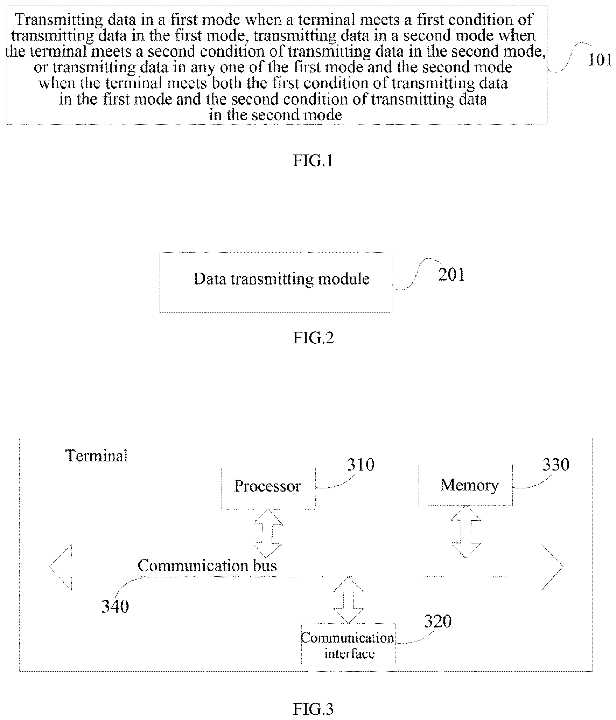

As shown in FIG.1, FIG.1 is a flow diagram of a method for transmitting data in accordance with embodiments of the present application, the method includes the following steps:
step 101: transmitting data in a first mode when a terminal meets a first condition of transmitting data in the first mode; transmitting data in a second mode when the terminal meets a second condition of transmitting data in the second mode; or, transmitting data in any one of the first mode and the second mode when the terminal meets both the first condition of transmitting data in the first mode and the second condition of transmitting data in the second mode.

Specifically, the first mode is a mode without (w/o) radio resource control (RRC) signaling, and the second mode is a mode other than the first mode among modes for direct transmission of data.

For example, the second mode could be a mode with RRC signaling, and is not specifically limited thereto.

It should be noted that transmitting data in the mode w/o RRC signaling may mean that no RRC signaling is carried when sending uplink to network side (that is, it could be understood that only data to be transmitted are included and RRC message is not included); and the mode with RRC signaling may mean that RRC signaling is carried when sending uplink to network side (that is, both data and RRC message are sent simultaneously). In addition, the mode w/o RRC signaling could also indicate that no additional RRC signaling is carried when sending uplink to network side (for example, the message that triggers sending uplink to the network side itself is a RRC message, which does not require additional RRC signaling); and the mode with RRC signaling could indicate that additional RRC messages are carried when sending uplink to network side.

In addition, it should be noted that the data in the present embodiments could be defined as small data, which mainly refer to small amount of data. This embodiment is used for a terminal with an unconnected state to transmit small data directly.

Specifically, according to the embodiment, it can be determined whether to use the first mode or the second mode to transmit data according to any one of the following schemes:
a first scheme: transmitting data in a first mode when the terminal meets a first condition of transmitting data in the first mode;
in the first scheme, data is transmitted in the first mode, that is, data is transmitted in a mode w/o RRC signaling as long as the terminal meets the first condition of transmitting data in the first mode, that is, regardless of whether the terminal meets the second condition of transmitting data in the second mode or not;
a second scheme: transmitting data in the second mode when the terminal meets the second condition of transmitting data in the second mode;
in the second scheme, data is transmitted in the second mode, for example, data is transmitted in the mode with RRC signaling as long as the terminal meets the second condition of transmitting data in the second mode, that is, regardless of whether the terminal meets the first condition of transmitting data in the first mode or not; and
a third scheme: transmitting data in any one of the first mode and the second mode when the terminal meets both the first condition of transmitting data in the first mode and the second condition of transmitting data in the second mode;
in the third scheme, it could be determined by the terminal whether to select the first mode or the second mode, that is, the terminal could select either mode to transmit data when the terminal meets both the first condition and the second condition.

In this embodiment, the mode to transmit data is determined by any one of the schemes above, which makes the terminal could select an appropriate mode to transmit small data.

Further, in this embodiment, based on a preset premise, an order for detecting the first condition and the second conditions can be determined, i.e., it can be determined that the detection that whether the terminal meets the first condition is performed firstly, or the detection that whether the terminal meets the second condition is performed firstly, which would be explained by the following description.

Before transmitting data in the first mode when the terminal meets the first condition of transmitting data in the first mode, the method further includes any one of the following steps.

Detecting whether the terminal meets the first condition when it is determined that the first mode has a higher priority than the second mode based on a network-side-configured or protocol-predefined priority of the first mode and the second mode.

In this case, the network side preconfigures or the protocol predefines priority of the first mode and the second mode, and the first mode has a higher priority than the second mode, that is, a priority should be given to the first mode when small data is transmitted, and the terminal could detect whether the terminal meets the first condition based on the priority. The data may be transmitted in the first mode when the terminal meets the first condition.

It should be noted that if it is detected that the terminal does not meet the first condition, then it is detected that whether the terminal meets the second condition.

Detecting whether the terminal meets the first condition when it is determined that the first mode is prior to the second mode based on a network-side-configured or protocol-predefined order for detecting the first mode and the second mode.

In this case, the network side preconfigures or the protocol predefines the order for detecting the first mode and the second mode, the first mode is prior to the second mode in the order, that is, the terminal should firstly determine whether the first condition for transmitting data in the first mode is met, and the terminal could detect whether the terminal meets the first condition based on the order. The data may be transmitted in the first mode if the terminal meets the first condition.

It should be noted that, if it is detected that the terminal does not meet the first condition, that whether the terminal meets the second condition can be detected.

Detecting whether the terminal meets the first condition when it is detected that the terminal does not meet the second condition.

In this case, if that whether the terminal meets the second condition is detected firstly and it is determined that the terminal does not meet the second condition, then that whether the terminal meets the first condition can be detected.

The terminal could first detect whether the terminal meets the second condition based on the priority or the detection order, which will not be explained much here.

That is, under any one of the three conditions above, in this embodiment, it is first detected whether the terminal meets the first condition of transmitting data in the first mode and the data is transmitted in the first mode if the terminal meets the first condition; otherwise, it is detected whether the terminal meets the second condition of transmitting data in the second mode.

In addition, before transmitting data in the second mode when the terminal meets the second condition of transmitting data in the second mode, the method further includes any one of the following steps.

Detecting whether the terminal meets the second condition when it is determined that the second mode has a higher priority than the first mode based on a network-side-configured or protocol-predefined priority of the first mode and the second mode;

In this case, a network side preconfigures or a protocol predefines priority of the first mode and the second mode, and the second mode has a higher priority than the first mode, that is, a priority should be given to second mode when small data is transmitted, and the terminal could detect whether the terminal meets the second condition based on the priority. The data is transmitted in the second mode if the terminal meets the second condition; and

It should be noted that if it is detected that the terminal does not meet the second condition, then it is detected whether the terminal meets the first condition.

Detecting whether the terminal meets the second condition when it is determined that the second mode is prior to the first mode based on a network-side-configured or protocol-predefined order for detecting the first mode and the second mode.

In this case, network side preconfigures or protocol predefines an order for detecting the first mode and the second mode, and the second mode is prior to the first mode according to the detection order, that is, the terminal should first determine whether the second condition for data transmission in the second mode is met, and the terminal could detect whether the terminal meets the second condition based on the order. The data may be transmitted in the second mode if the terminal meets the second condition.

It should be noted that if it is detected that the terminal does not meet the second condition, whether the terminal meets the first condition may be detected.

Detecting whether the terminal meets the second condition when it is detected that the terminal does not meet the first condition.

In this case, if it is first detected that whether the terminal meets the first condition and the terminal does not meet the first condition, then it is detected whether the terminal meets the second condition.

The terminal could determine first to detect whether the terminal meets the first condition based on the priority or the detection order, which will not be explained much here.

That is, under any one of the three conditions above, in this embodiment, it is first detected whether the terminal meets the second condition of transmitting data in the second mode and if yes, data can be transmitted in the second mode; and otherwise, it is detected whether the terminal meets the first condition of transmitting data in the first mode.

The above embodiments will be systematically illustrated by taking data being small data as an example as follow.

For example, if the mode with RRC signaling and the mode w/o RRC signaling are both optional among the current candidate modes for direct transmission of small data and the terminal and/or the network side both could support the mode with RRC signaling and the mode w/o RRC signaling for data transmission, the mode for transmitting the small data may be determined as follows.

In an embodiment, the mode can be determined depending on the terminal. That is, when the terminal meets both of the first condition of transmitting small data in the mode w/o RRC signaling and the second condition of transmitting small data in the mode with RRC signaling, small data can be transmitted in either of the mode w/o RRC signaling and the mode with RRC signaling.

In another embodiment, a network side configures a priority of the first mode and the second mode to transmit small data. For example, if the network side configures that the mode w/o RRC signaling has a higher priority, that is, priority may be given to the mode w/o RRC signaling, the terminal first detects whether it meets the first condition of transmitting small data in the mode w/o RRC signaling; if the first condition is met, the mode w/o RRC signaling will be selected to transmit the small data; if the first condition is not met, it is then detected whether the terminal meets the second condition of transmitting small data in the mode with RRC signaling.

In yet another embodiment, a protocol predefines an order for detecting first mode and second mode, which means that which mode meets the condition should be detected preferably. For example, protocol could predefine that the terminal first detects whether the first condition of transmitting small data in the mode w/o RRC signaling is met firstly; if the first condition is met, the w/o RRC signaling mode will be selected to transmit the small data; if the first condition is not met, the terminal then detects whether the second condition of transmitting small data in the mode with RRC signaling is met; or, protocol may predefines that the terminal may first detect whether the second condition of transmitting small data in the mode with RRC signaling is met; if the second condition is met, the mode with RRC signaling will be selected to transmit small data; if the second condition is met, the terminal then detects whether the first condition of transmitting small data in the mode w/o RRC signaling is met.

In this embodiment, it may check first whether the first condition or the second condition is met based on the priority or the order for detecting the first mode and the second mode, that is, it is determined that whether the first mode or the second mode is selected to transmit data.

Further, the first condition may include at least one of the following conditions:
(1) the terminal has effective specific resources for data transmission;
(2) the terminal has a capability to transmit data in the first mode;
(3) a network side has a capability to transmit data in the first mode or permits to transmit data in the first mode;
(4) triggering for data transmission lies on mobile originated data (MO-data) or data transmission;
(5) data to be transmitted adopt a radio link-control unacknowledged mode (RLC UM);
(6) an amount of data to be transmitted or a total amount of transmitted data is less than or equal to a first preset threshold and it is considered that the packet is too large and transmitting data in the first mode is unsuitable if the amount of data to be transmitted or the total amount of transmitted data is equal to or greater than the first preset threshold;
(7) an amount of data to be transmitted or a total amount of transmitted data is within a first preset range; and it is considered that the packet is too large and transmitting data in the first mode is unsuitable if the amount of data to be transmitted or the total amount of transmitted data is beyond the first preset range;
(8) the terminal has no subsequent uplink and/or downlink data;
(9) the terminal has no expected uplink and/or downlink data; and
(10) data to be transmitted corresponds to a first preset data radio bearer (DRB).

Specifically, any one of the above first conditions above could be either network-side-configured or protocol-predefined, and it is not limited thereto. For example, the network side could configure that when a corresponding DRB id is equal to 5, data can be transmitted in the first mode , that is, only when DRB id is equal to 5, does the terminal use the first mode, i.e., the mode w/o RRC signaling; or, the terminal could configure that a corresponding first preset threshold for transmitting data in the first mode is equal to 100 bits , that is, only when the transmitted data is less than or equal to 100 bits, does the terminal use the first mode, i.e., the mode w/o RRC signaling. For example, the condition (8) "the terminal has no subsequent uplink and/or downlink data" could be protocol-predefined but not network-side-configured.

In addition, the specific resources refer to resources dedicated to the terminal, the network side could uniquely identify the terminal based on the specific resources; specifically, the specific resources may be a preconfigured resource (e.g. configured grant type 1 resource) and/or specific random access channel (RACH) resource (e.g. specific 4-step RACH resource, or specific 2-step RACH resource).

Specifically, the specific resources are determined as effective specific resources when the specific resources meet at least one of:
not exceeding an effective time of the specific resources;
not exceeding an effective usage range of the specific resources;
an amount of data that could be transmitted by the specific resources is equal to or greater than an amount of data to be transmitted;
timing advance (TA) under the specific resources is effective; and
there is no change for service cell or radio access network (RAN) after the terminal receives the specific resources.

That is, the condition that the specific resources are effective specific resources could be at least one of the following: the effective time of the specific resources is not exceeded, the effective range of the specific resources is still effective (for example, configuring that the effective range of the specific resources is A cell and B cell, and the configuration has been in force), an amount of data that could be transmitted by the specific resources is greater than or equal to the amount of data to be transmitted, and the TA under the specific resources is still effective. the service cell or the RAN node has not changed since the specific resources are received.

Whether transmitting data in the first mode, i.e., the mode w/o RRC signaling mode based on one or more conditions above by the terminal is illustrated by taking the data being small data as an example in following embodiments.

In an embodiment, assuming that a protocol predefines conditions (1), (2), (3), (4) and (5) included in the above first condition as conditions for determining whether small data are transmitted in the mode w/o RRC signaling. Then, when an inactive-state terminal expects to transmit a data packet, the inactive-state terminal has an effective preconfigured resource (for example, the network side configures a specific configured grant type 1 resource for the terminal), the terminal has the capability to transmit small data in the mode w/o RRC signaling, the network side has the capability to transmit small data in the mode w/o RRC signaling, the triggering of data transmission lies on MO-data, and the transmitted small data corresponds to RLC UM, the terminal transmits data in the mode w/o RRC signaling.

In another embodiment, assuming that a protocol predefines conditions (1), (2), (3), (4), (5) and (6) included in the above first condition as conditions for determining whether small data are transmitted in the mode w/o RRC signaling. Then, when an inactive-state terminal expects to transmit a data packet, and the inactive-state terminal determines that the total amount of data to be transmitted exceeds the first preset threshold, the terminal could not transmit data in the mode w/o RRC signaling.

In yet another embodiment, assuming that a protocol predefines conditions (1), (2), (3), (4) and (6) in the above first conditions as conditions for determining whether small data are transmitted in the mode w/o RRC signaling. Then, when an inactive-state terminal expects to transmit a data packet, the unconnected-state terminal is configured with an effective specific 2-step RACH resource, the terminal has the capability to transmit small data in the mode w/o RRC signaling, the network side has the capability to transmit small data in the mode w/o RRC signaling, the triggering of data transmission lies on small data transmission, and the amount of small data to be transmitted or a total size of data is less than or equal to the first preset threshold (the first preset threshold could be configured directly explicitly or implicitly by the network side. For example, the terminal determines that a size of a maximum data packet that the specific 2-step RACH resource could send does not exceed the first preset threshold based on the current resource), the terminal transmits data in the mode w/o RRC signaling.

What needs to be explained is that the connectionless-state terminal is the terminal having any RRC states other than the connected state.

In yet another embodiment, assuming that a protocol predefines conditions (2), (3) and (6) included in the above first conditions as conditions for determining whether small data are transmitted in the mode w/o RRC signaling. Then, if the current network does not allow transmitting small data in the mode w/o RRC signaling, the terminal cannot transmit data in the mode w/o RRC signaling.

In yet another embodiment, assuming that a protocol predefines conditions (2), (3) and (10) included the above first conditions as conditions for determining whether small data are transmitted in the mode w/o RRC signaling. Then, when the inactive-state terminal has the capability to transmit small data in the mode w/o RRC signaling, the network allows transmitting small data in the mode w/o RRC signaling, and the transmitted small data corresponds to a specific DRB, the terminal transmits data in the mode w/o RRC signaling.

Thus, in this embodiment, whether the terminal could transmit small data in the first mode is determined by detecting whether the terminal meets at least one of the above first conditions, and the terminal could select an appropriate mode to transmit small data.

In addition, further, the second condition may include at least one of the following conditions:
the terminal has a capability to transmit data in the second mode;
a network side has a capability to transmit data in the second mode or permits to transmit data in the second mode;
triggering for data transmission lies on mobile originated data (MO-data) or data transmission;
an amount of data to be transmitted or a total amount of transmitted data is less than or equal to a second preset threshold;
the amount of data to be transmitted or a total amount of transmitted data is within a second preset range;
the terminal has no subsequent uplink and/or downlink data;
the terminal has no expected uplink and/or downlink data; and
data to be transmitted corresponds to a second preset data radio bearer (DRB).

It should be noted that at least one of the above second conditions could be either network-side-configured or protocol-predefined, which is not limited here thereto, and the above second conditions are no longer illustrated here.

In this embodiment, when the terminal meets the first condition of transmitting data in the first mode, the first mode is selected to transmit data, when the terminal meets the second condition of transmitting data in the second method, the second mode is selected to transmit data, or when the terminal meets both the first condition and the second condition, either of the first mode and the second mode is selected to transmit data, which realizes the selection of data transmission modes in small data transmission by the terminal, so that the terminal could select an appropriate mode to transmit data.

Furthermore, refer to FIG.2, FIG.2 is a modular diagram of a device for transmitting data in accordance with an embodiment of the present application. The device includes:
a data transmitting module 201, configured to: transmit data in a first mode when the terminal meets the first condition of transmitting data in the first mode; transmit data in a second mode when the terminal meets the second condition of transmitting data in the second mode; or transmit data in any one of the first mode and the second mode when the terminal meets both the first condition of transmitting data in the first mode and the second condition of transmitting data in the second mode.

The first mode is a mode without (w/o) radio resource control (RRC) signaling, and the second mode is a mode other than the first mode among modes for direct transmission of data.

Alternatively, the first condition includes at least one of the following conditions: the terminal has effective specific resources for data transmission; the terminal has a capability to transmit data in the first mode; the network side has a capability to transmit data in the first mode or permits to transmit data in the first mode; triggering for data transmission lies on mobile originated data (MO-data) or data transmission; data to be transmitted adopt radio link-control unacknowledged mode (RLC UM); an amount of data to be transmitted or a total amount of transmitted data is less than or equal to a first preset threshold; an amount of data to be transmitted or a total amount of transmitted data is within a first preset range; the terminal has no subsequent uplink and/or downlink data; the terminal has no expected uplink and/or downlink data; and data to be transmitted corresponds to a first preset data radio bearer (DRB).

Alternatively, the specific resources are determined as effective specific resources when the specific resources meet at least one of: not exceeding effective time of the specific resources; not exceeding effective usage range of the specific resources; an amount of data that could be transmitted by the specific resources is equal to or greater than the amount of data to be transmitted; timing advance (TA) under the specific resources is effective; and there is no change for service cell or radio access network RAN after the terminal receives the specific resources.

It should be noted that the device in this embodiment could realize all the methods and steps of the above method embodiments, and could achieve the same beneficial effect, and the same method steps and beneficial effect are no longer described here.

Refer to FIG.3, FIG.3 is a structural diagram of a terminal in accordance with an embodiment of the present application, and the terminal includes a processor 310, a communication interface 320, a memory 330 and a communication bus 340 in which, the processor 310, the communication interface 320 and the memory 330 communicate with each other through the communication bus 340. The processor 310 could call program stored on the memory 330 and execute the program to perform the following steps:
transmitting data in a first mode when a terminal meets a first condition of transmitting data in the first mode, transmitting data in a second mode when the terminal meets a second condition of transmitting data in the second mode; or transmitting data in any one of the first mode and the second mode when the terminal meets both the first condition of transmitting data in the first mode and the second condition of transmitting data in the second mode. The first mode is a mode without (w/o) radio resource control (RRC) signaling, and the second mode is a mode other than the first mode among modes for direct transmission of data.

Alternatively, before transmitting data in the first mode when the terminal meets the first condition of transmitting data in the first mode, the program, when executed by the processor, causes the processor to perform any one of following steps: detecting whether the terminal meets the first condition when it is determined that the first mode has a higher priority than the second mode based on a network-side-configured or protocol-predefined priority of the first mode and the second mode, detecting whether the terminal meets the first condition when it is determined that the first mode is prior to the second mode based on a network-side-configured or protocol-predefined order for detecting the first mode and the second mode, and detecting whether the terminal meets the first condition when it is detected that the terminal does not meet the second condition.

Alternatively, before transmitting data in the second mode when the terminal meets the second condition of transmitting data in the second mode, the program, when executed by the processor, causes the processor to perform any one of following steps: detecting whether the terminal meets the second condition when it is determined that the second mode has a higher priority than the first mode based on a network-side-configured or protocol-predefined priority of the first mode and the second mode, detecting whether the terminal meets the second condition when it is determined that the second mode is prior to the first mode based on a network-side-configured or protocol-predefined order for detecting the first mode and the second mode, and detecting whether the terminal meets the second condition when it is detected that the terminal does not meet the first condition.

Alternatively, the first condition is defined as at least one of the following conditions: the terminal has effective specific resources for data transmission; the terminal has a capability to transmit data in the first mode; the network side has a capability to transmit data in the first mode or permits to transmit data in the first mode; triggering for data transmission lies on mobile originated data (MO-data) or data transmission; data to be transmitted adopt radio link-control unacknowledged (RLC UM) mode; an amount of data to be transmitted or a total amount of transmitted data is less than or equal to a first preset threshold; an amount of data to be transmitted or a total amount of transmitted data is within a first preset range; the terminal has no subsequent uplink and/or downlink data; the terminal has no expected uplink and/or downlink data; and data to be transmitted corresponds to a first preset data radio bearer (DRB).

Alternatively, the specific resources are determined as effective specific resources when the specific resources meet at least one of: not exceeding effective time of the specific resources; not exceeding effective usage range of the specific resources; an amount of data that could be transmitted by the specific resources is equal to or greater than the amount of data to be transmitted; timing advance (TA) under the specific resources is effective; and there is no change for service cell or radio access network RAN after the terminal receives the specific resources.

Alternatively, the second condition is defined as at least one of the following conditions: the terminal has a capability to transmit data in the second mode; the network side has a capability to transmit data in the second mode or permits to transmit data in the second mode; triggering for data transmission lies on mobile originated data (MO-data) or data transmission; an amount of data to be transmitted or a total amount of transmitted data is less than or equal to a second preset threshold; the amount of data to be transmitted or a total amount of transmitted data is within a second preset range; the terminal has no subsequent uplink and/or downlink data; the terminal has no expected uplink and/or downlink data; and data to be transmitted corresponds to a second preset data radio bearer (DRB).

It should be noted that the terminal in this embodiment could realize all the methods and steps of the above method embodiments, and could achieve the same beneficial effect, so the same method steps and beneficial effect are no longer described here.

In addition, the logic instructions in the memory 330 may be realized in the form of software functional units and may be stored in a computer readable storage medium when being sold or used as independent products. Based on such understandings, the technical solution of the present application or the part that contributes to the related art or the part of the technical solution can be embodied in the form of a software product in essence. The computer software product is stored in a storage medium, including a number of instructions to enable a computer device (such as personal computers, servers, or network equipment, etc.) to perform all or a part of the steps of the methods described in each embodiment of the disclosure. The storage media above include U disk, mobile hard disk, read-only memory (ROM), random access memory (RAM), disk or optical disk and other media that may store program code.

An embodiment of the disclosure also provides a non-transitory computer readable storage medium storing computer program, wherein, the processor achieves the steps of above embodiments the when executing the program, which could achieve the same technical effect, so it's not repeated here.

The device embodiments described above is only schematic, in which the unit described as a separation component may be or may not be physically separated, and the component displayed as a unit may be or may not be a physical unit. That is, it may be located in a position or may be distributed to multiple network units. Some or all of the modules may be selected according to the actual needs to achieve the purpose of the scheme of the embodiments. Those of ordinary skill in the art may understand and implement the embodiments without creative labor.

Through the description of the above embodiment methods, technicians in this field may clearly understand that each embodiment may be realized by software and the necessary general hardware platform, and of course, it can also be realized by hardware. Based on such understandings, the technical solution in essence or the part that contributes to the related art can be embodied in the form of a software product. The computer software product is stored in a computer readable storage medium, such as ROM/RAM, disk, optical disk, etc., including a number of instructions to enable a computer device (e. g., personal computer, server, or network equipment) to perform the methods described in each embodiment or some parts of the embodiment.

Finally, it should be noted that the above embodiments are only used to illustrate the technical solution of the disclosure, rather than limiting the technical solution. Although the application is described in detail with reference to the above embodiments, those of ordinary skill in the art should understand that they may still modify the technical solution recorded in the above embodiments, or replace some of the technical features equally. These modifications or replacements do not make the essence of the corresponding technical solution depart from the spirit and scope of the technical solution of each embodiment of the disclosure.

## Claims

1. A method for transmitting data, comprising
transmitting data in a first mode when a terminal meets a first condition of transmitting data in the first mode,
transmitting data in a second mode when a terminal meets a second condition of transmitting data in the second mode, or
transmitting data in any one of the first mode and the second mode when the terminal meets both the first condition of transmitting data in the first mode and the second condition of transmitting data in the second mode,
wherein the first mode is a mode without (w/o) radio resource control (RRC) signaling, and the second mode is a mode other than the first mode among modes for direct transmission of data.

2. The method of claim 1, wherein before transmitting data in the first mode when a terminal meets a first condition of transmitting data in the first mode, the method further comprises any one of:
detecting whether the terminal meets the first condition when it is determined that the first mode has a higher priority than the second mode based on a network-side-configured or protocol-predefined priority of the first mode and the second mode;
detecting whether the terminal meets the first condition when it is determined that the first mode is prior to the second mode based on a network-side-configured or protocol-predefined order for detecting the first mode and the second mode; and
detecting whether the terminal meets the first condition when it is detected that the terminal does not meet the second condition.

3. The method of claim 1, wherein before transmitting data in the second mode when a terminal meets a second condition of transmitting data in the second mode, the method further comprises any one of:
detecting whether the terminal meets the second condition when it is determined that the second mode has a higher priority than the first mode based on a network-side-configured or protocol-predefined priority of the first mode and the second mode;
detecting whether the terminal meets the second condition when it is determined that the second mode is prior to the first mode based on a network-side-configured or protocol-predefined order for detecting the first mode and the second mode, and
detecting whether the terminal meets the second condition when it is detected that the terminal does not meet the first condition.

4. The method of any one of claims 1-3, wherein the first condition comprises at least one of the following conditions:
a terminal has effective specific resources for data transmission;
a terminal has a capability to transmit data in the first mode;
a network side has a capability to transmit data in the first mode or permits to transmit data in the first mode;
triggering for data transmission lies on mobile originated data (MO-data) or data transmission;
data to be transmitted uses a radio link-control unacknowledged mode (RLC UM);
an amount of data to be transmitted or a total amount of transmitted data is less than or equal to a first preset threshold;
an amount of data to be transmitted or a total amount of transmitted data is within a first preset range;
a terminal has no subsequent uplink and/or downlink data;
a terminal has no expected uplink and/or downlink data; and
data to be transmitted corresponds to a first preset data radio bearer (DRB).

5. The method of claim 4, wherein the specific resources are determined as effective specific resources when the specific resources meet at least one of the followings:
not exceeding an effective time of the specific resources;
not exceeding an effective usage range of the specific resources;
an amount of data that is allowed to be transmitted by the specific resources is equal to or greater than an amount of data to be transmitted;
timing advance (TA) under the specific resources is effective; and
there is no change for service cell or radio access network (RAN) after the terminal receives the specific resources.

6. The method of any one of claims 1-3, wherein the second condition comprises at least one of the following conditions:
a terminal has a capability to transmit data in the second mode;
a network side has a capability to transmit data in the second mode or permits to transmit data in the second mode;
triggering for data transmission lies on mobile originated data (MO-data) or data transmission;
an amount of data to be transmitted or a total amount of transmitted data is less than or equal to a second preset threshold;
an amount of data to be transmitted or a total amount of transmitted data is within a second preset range;
a terminal has no subsequent uplink and/or downlink data;
a terminal has no expected uplink and/or downlink data; and
data to be transmitted corresponds to a second preset data radio bearer (DRB).

7. A device for transmitting data, comprising a data transmitting module, wherein the data transmitting module is configured to
transmit data in a first mode to when a terminal meets a first condition of transmitting data in the first mode;
transmit data in a second mode to when a terminal meets a second condition of transmitting data in the second mode; or
transmit data in any one of the first mode and the second mode when the terminal meets both the first condition of transmitting data in the first mode and the second condition of transmitting data in the second mode;
wherein the first mode is a mode without (w/o) radio resource control (RRC) signaling, and the second mode is a mode other than the first mode among modes for direct transmission of data.

8. The device of claim 7, further comprising a first detecting module, wherein the first detecting module is configured to perform any one of the following steps: before transmitting data in the first mode when a terminal meets a first condition of transmitting data in the first mode,
detecting whether the terminal meets the first condition when it is determined that the first mode has a higher priority than the second mode based on a network-side-configured or protocol-predefined priority of the first mode and the second mode,
detecting whether the terminal meets the first condition when it is determined that the first mode is prior to the second mode based on a network-side-configured or protocol-predefined order for detecting the first mode and the second mode; and
detecting whether the terminal meets the first condition when it is detected that the terminal does not meet the second condition.

9. The device of claim 7, further comprising a second detecting module, wherein the device is configured to perform any one of the following steps: before transmitting data in the second mode when a terminal meets a second condition of transmitting data in the second mode,
detecting whether the terminal meets the second condition when it is determined that the second mode has a higher priority than the first mode based on a network-side-configured or protocol-predefined priority of the first mode and the second mode,
detecting whether the terminal meets the second condition when it is determined that the second mode is prior to the first mode based on a network-side-configured or protocol-predefined order for detecting the first mode and the second mode, and
detecting whether the terminal meets the second condition when it is detected that the terminal does not meet the first condition.

10. The device of any one of claims 7-9, wherein, the first condition comprises at least one of the following conditions:
a terminal has effective specific resources for data transmission;
a terminal has a capability to transmit data in the first mode;
a network side has a capability to transmit data in the first mode or permits to transmit data in the first mode;
triggering for data transmission lies on mobile originated data (MO-data) or data transmission;
data to be transmitted uses a radio link-control unacknowledged mode (RLC UM);
an amount of data to be transmitted or a total amount of transmitted data is less than or equal to a first preset threshold;
an amount of data to be transmitted or a total amount of transmitted data is within a first preset range;
a terminal has no subsequent uplink and/or downlink data;
a terminal has no expected uplink and/or downlink data; and
data to be transmitted corresponds to a first preset data radio bearer (DRB).

11. The device of claim 10, wherein the specific resources are determined as effective specific resources when the specific resources meet at least one of the followings:
not exceeding an effective time of the specific resources;
not exceeding an effective usage range of the specific resources;
an amount of data that is allowed to be transmitted by the specific resources is equal to or greater than an amount of data to be transmitted;
timing advance (TA) under the specific resources is effective; and
there is no change for service cell or radio access network (RAN) after the terminal receives the specific resources.

12. The device of any one of claims 7-9, wherein the second condition comprises at least one of the following conditions:
a terminal has a capability to transmit data in the second mode;
a network side has a capability to transmit data in the second mode or permits to transmit data in the second mode;
triggering for data transmission lies on mobile originated data (MO-data) or data transmission;
an amount of data to be transmitted or a total amount of transmitted data is less than or equal to a second preset threshold;
an amount of data to be transmitted or a total amount of transmitted data is within a second preset range;
a terminal has no subsequent uplink and/or downlink data;
a terminal has no expected uplink and/or downlink data; and
data to be transmitted corresponds to a second preset data radio bearer (DRB).

13. A terminal, comprising a memory, a processor and program stored in the memory and executable by the processor, which when executed by the processor, causes the processor to perform following steps:
transmitting data in a first mode when a terminal meets a first condition of transmitting data in the first mode,
transmitting data in a second mode when a terminal meets a second condition of transmitting data in the second mode, or
transmitting data in any one of the first mode and the second mode when the terminal meets both the first condition of transmitting data in the first mode and the second condition of transmitting data in the second mode;
wherein the first mode is a mode without (w/o) radio resource control (RRC) signaling, and the second mode is a mode other than the first mode among modes for direct transmission of data.

14. The terminal of claim 13, wherein before transmitting data in the first mode when the terminal meets a first condition of transmitting data in the first mode, the program, when executed by the processor, causes the processor to perform any one of following steps:
detecting whether the terminal meets the first condition when it is determined that the first mode has a higher priority than the second mode based on a network-side-configured or protocol-predefined priority of the first mode and the second mode,
detecting whether the terminal meets the first condition when it is determined that the first mode is prior to the second mode based on a network-side-configured or protocol-predefined order for detecting the first mode and the second mode; and
detecting whether the terminal meets the first condition when it is detected that the terminal does not meet the second condition.

15. The terminal of claim 13, wherein before transmitting data in the second mode when the terminal meets a second condition of transmitting data in the second mode, the program, when executed by the processor, causes the processor to perform any one of following steps:
detecting whether the terminal meets the second condition when it is determined that the second mode has a higher priority than the first mode based on a network-side-configured or protocol-predefined priority of the first mode and the second mode;
detecting whether the terminal meets the second condition when it is determined that the second mode is prior to the first mode based on a network-side-configured or protocol-predefined order for detecting the first mode and the second mode, and
detecting whether the terminal meets the second condition when it is detected that the terminal does not meet the first condition.

16. The terminal of any one of claims 13-15, wherein, the first condition comprises at least one of the following conditions:
a terminal has effective specific resources for data transmission;
a terminal has a capability to transmit data in the first mode;
a network side has a capability to transmit data in the first mode or permits to transmit data in the first mode;
triggering for data transmission lies on mobile originated data (MO-data) or data transmission;
data to be transmitted uses a radio link-control unacknowledged mode (RLC UM);
an amount of data to be transmitted or a total amount of transmitted data is less than or equal to a first preset threshold;
an amount of data to be transmitted or a total amount of transmitted data is within a first preset range;
a terminal has no subsequent uplink and/or downlink data;
a terminal has no expected uplink and/or downlink data; and
data to be transmitted corresponds to a first preset data radio bearer (DRB).

17. The terminal of claim 16, wherein the specific resources are determined as effective specific resources when the specific resources meet at least one of:
not exceeding an effective time of the specific resources;
not exceeding an effective usage range of the specific resources;
an amount of data that is transmitted by the specific resources is equal to or greater than an amount of data to be transmitted;
timing advance (TA) under the specific resources is effective; and
there is no change for service cell or radio access network (RAN) after a terminal receives the specific resources.

18. The terminal of any one of claims 13-15, wherein the second condition comprises at least one of the following conditions:
a terminal has a capability to transmit data in the second mode;
a network side has a capability to transmit data in the second mode or permits to transmit data in the second mode;
triggering for data transmission lies on mobile originated data (MO-data) or data transmission;
an amount of data to be transmitted or a total amount of transmitted data is less than or equal to a second preset threshold;
an amount of data to be transmitted or a total amount of transmitted data is within a second preset range;
a terminal has no subsequent uplink and/or downlink data;
a terminal has no expected uplink and/or downlink data; and
data to be transmitted corresponds to a second preset data radio bearer (DRB).

19. A non-transitory computer readable storage medium, having stored thereon computer program, which when executed by a processor, causes the processor to perform steps of any one of claims 1-6.
